# EUROPEAN PATENT APPLICATION

(11) **EP 4 015 464 A1**
(43) Date of publication of application: **22.06.2022**
(21) Application number: 20853797.7
(22) Date of filing: 13.08.2020
(51) Int. Cl.: C02F 1/46, C02F 1/461, C02F 1/467, B01J 19/08

(54) **SYSTEM AND METHOD FOR THE ELECTRO-PURIFICATION OF EFFLUENT USING A TARGETED ELECTRON TRAP AND CORRESPONDING EQUIPMENT**

(30) Priority: 16.08.2019 BR 102019017102
(71) Applicant: Duvoisin, Charles Adriano, 88330-155 Balneário Camboriu, SC (BR)
(72) Inventor: BRASIL, Edvan Alexandre de Oliveira, 88330-326 Balneário Camboriu, SC (BR); HUFF, Israel Fernandes, 88330-410 Balneário Camboriu, SC (BR); SANTIN, Marcos Ricardo, 88330-155 Balneário Camboriu, SC (BR); DUVOISIN, Charles Adriano, 88330-155 Balneário Camboriu, SC (BR)
(74) Representative: Kutzenberger Wolff & Partner
(86) International application number: PCT/BR2020/050319
(87) International publication number: WO 2021/030890

(57) **Abstract**

The present application of patent for invention refers to a system and method for effluent electropurification through targeted electron trapping, and corresponding equipment, pertaining to the field of methods for effluent electropurification, electroneutralization, and electrosterilization, through the application of targeted electron trapping and corresponding equipment. This being applied in effluent treatment piping (2) or tanks (20), which are equipped on their inside (10) with an insulating coating (19) followed by a metallized mesh layer (4) interconnected to the spark gap (6) and inner electrodes (11) externally coated with insulating material (14) attached to the insulating bus bar (12).

## Description

### TECHNICAL FIELD

The present application of patent for invention relates to a system and method for effluent electropurification through targeted electron trapping, and corresponding equipment, pertaining to the field of methods for effluent electropurification, electroneutralization, and electrosterilization, through the application of targeted electron trapping and corresponding equipment.

### PRIOR ART

The commonly used effluent treatments are quite varied, as there are many physical and chemical means used as systems and methods for waste treatment plants at hand.

Among the typical treatment plants, filters are used, through traditional physical barriers, sieves, gravel, activated carbon, polymers, nanoparticles, cavitations, nanocavitations, centrifuges, typical electrolysis systems, decanters, ozone generators, electromagnetic waves, etc., and a variety of chemical products and flocculators are used as chemical means capable of sterilizing, neutralizing, flocculating, agglutinating, polarizing, and purifying the generated effluents.

Knowing that cyanide is a reagent widely used in the leaching of precious metals and in the surface finish of certain metals, its high toxicity makes using efficient technologies when treating effluents from such processes essential.

There are several techniques available for treating industrial effluents containing cyanide, however the most used methods are based on the chemical oxidation of cyanide to a less toxic species, cyanate, which hydrolyzes to produce ammonium and bicarbonate ions, in addition to a sludge containing heavy metal hydroxides, when present in the effluent.

Among the most recent techniques for treating cyanide-containing effluents, electrochemical oxidation has some advantages, such as the possibility of recovering metals complexed by cyanide, in addition to not requiring additional chemical reagents, thus being perfectly capable of meeting the requirements of environmental agencies.

In the state of the art, a wide variety of solutions provide effluent sterilization, neutralization, surfactant treatment, flocculation, electrolysis, galvanization, and purification, but none of these inventions use the properties and action of electron traps as purifying agents, sterilizers, and effluent processors.

This system is presented in patent document GB795803A, from 1954, which describes improvements related to electron discharge devices with ion trap arrangements carried out using electron traps as an ion trap magnetic field system is produced by a magnet permanently attached to the tube neck by a spring clip in the angular and axial position.

Another patent document, BR102016026848-6A2 from 2016 by the same author of the present invention, describes a system and method for neutralizing pesticides or similar agents contained in foodstuffs and a structural arrangement for implementing the same, which relates to a system and method, as well as equipment for neutralizing pesticides or similar agents found inside or on the outside of contaminated foodstuffs; developed to address the problems caused by the frequent and abusive use of chemicals in agriculture, more commonly known as pesticides, as well as the problems caused by heavy metals contained in foodstuffs, through the electron trap.

The invention described in BR102016026848-6 differs from the invention proposed herein in that the effluent is generated in large quantities and under special conditions, and also because it is made with special grounding systems and using an authentic methodology, also different from Leyda bottles.

Patent document BRP19915992-9A2, from 1999, also published as WO2000034184A1, describes an electrolytic cell and processes for electropurification and electrosynthesis of chemical products for electropurification of contaminated aqueous media, such as ground water and wastewater from industrial manufacturing facilities like paper mills, food processing plants, and textile mills, which are readily purified, decolorized, and sterilized by improved, more economic open configuration electrolysis cell designs with electrodes comprising a plurality of conductive porous elements in electrical contact with one another, the cells being divided or not and connected in monopolar or bipolar configuration, when coupled with very narrow capillary gap electrodes which ensures a more economic operation, particularly when treating solutions of relatively low conductivity.

Patent document BRPI9915992-9A2 described above already discloses a form of electropurification using a directly applied electrolysis system, but it differs greatly from the electron trap proposition claimed in this patent application, as a simple electric current through two electrodes does not characterize an electron trap, in which an electric current insulator will be necessary to generate a trap in this environment, plus a system comprising high electric voltage generators and, furthermore, the operation of this methodology does not require high electric energy consumption, as the electrical saturation will occur with electrical trapping in an electrically isolated environment, or even creating a desired electrical saturation under modular conditions, so the proposed electron trap is considerably different from the current system based purely on electrolysis.

The author's own patent document WO2018006141A1, from 2016, describes a system and method for electromagnetic energization of packaged contents and corresponding equipment, which is based on electrostatic storage capacity and thus providing physical/chemical changes to the foodstuffs at hand, which later allowed several different methods to be developed from this material and with specific applications for each context, including targeted research on the effects which a targeted electron trapping system can provide, for example, pH changes in a purely physical way, i.e., electron injection or trapping, decrease or increase of surface tension properties in liquids, capacity for electrostatic energy storage, with corresponding memory, electroneutralization of chemical or organic agents and, depending on the size of electron traps with huge differential potentials, and promises nuclear effects as nuclear capacitors, thus predicting the formation of isotopes of various elements from the periodic table.

It is also worth mentioning that the electrochemical oxidation of cyanide was first presented by Clevenger and Hall in 1913, as a viable alternative for treating cyanide-containing effluents due to the fact that it does not generate toxic intermediates, allowing both recycling and decomposition of cyanide (SMITH, A., MUDDER, T. The chemistry and treatment of cyanidation wastes. Chapters 1, 2, 5, and 6. London, England: Mining Journal Books Limited, 1991.).

Note that the electroneutralization capacity is already present in simple electrolysis processes with reports thereof being easily found throughout the literature, however, reports of using electron traps to electroneutralize chemicals or provide physicochemical effects in a practical way will certainly be difficult to find, as this methodology remained forgotten for a long time.

The author's own application PCT/BR2019/050239 is also presented, in which the use of applicable electron traps for specific purposes in oil or hydrocarbon exploration occurs with the goal of reducing surface tension of liquids which are part of the system for removing oil and derivatives thereof. As such, this invention differs greatly from the objectives and corresponding effects of the aforementioned PCT application. There are several advantages in using electron traps for the most diverse applications, such as: reduce energy consumption as compared to simple electrolysis, ease of adaptation in various practical systems either dynamically or in batching, simple and economical commercial application, amazing processing speed, among others.

Thus, it should be noted that the rapid growth and development of cities and industrial activities require improvements to provide the acceleration and effectiveness of contemporary sewage and effluent treatments.

This has led to the development of the present effluent electropurification system and method, through targeted electron trapping and the corresponding equipment claimed herein with the purpose of improving both the efficiency and agility in the effluent treatment process. An effluent electropurification method and system is presented herein, which uses the principle of electron traps that produce active hydroxyls, which physically/chemically electroneutralize the polarities existing in effluent media, thus accelerating the electrodecomposition process and also acting as surfactants, as they also reduce the surface tension of the water contained in said medium.

This process can be dynamically applied in the piping itself and thus the principle at hand can be used in continuous flow, as well as used in batches in tanks or decantation sites.

Another favorable aspect of this invention, based on the electron trap, is the low electrical consumption which makes it commercially viable, as electrical expenses in common electrolysis are a major commercial impairment.

The systems and methods presented by the use of the electron trap as an effluent electropurifier have many advantages, since in addition to providing physical and chemical actions dynamically, they are also versatile, economical, fast and practical.

The effluent electropurification system and method is based on the ability to trap electrons through targeted electron trapping, thus providing an electron saturation in the specific medium, which will generate active hydroxyls that act as true chemical surfactants in the medium at hand.

As such, desirable physical/chemical reactions for electroneutralization, surfactant treatment, reduction of surface tensions, decomposition, flocculating catalyst, among other important purifying functions of the effluents at hand will certainly occur in the saturation of electrons generated in the effluent to be treated.

Furthermore, this system and method, depending on the frequency applied to the electric current at hand, may provide the proposed medium with a sterilizing activity, thus reducing the load of pathogenic microorganisms therein.

This invention can be applied statically or dynamically, i.e., the corresponding equipment may be installed in the piping system and thus provide a continuous process in the effluent flow, as well as be installed in decantation sites, thus becoming a batch-based process.

### OBJECTS OF THE INVENTION

The main objective herein is to develop a system and method for effluent electropurification and electrotreatment through electron trapping, and corresponding equipment, which can be applied in a procedural manner directly in piping containing the effluent flow at hand, as well as being installed in decantation sites thereof.

Another objective of this invention is to provide a batch-based process with economic advantages and significant processing speeds as compared to common systems and methods used in the state of the art.

### DESCRIPTION OF THE FIGURES

The attached drawings show the system and method for effluent electropurification through targeted electron trapping, and corresponding equipment, which is easier to understand together with the numerical references detailed below, although this invention may vary in many different constructive forms customized for each application not shown in the drawings, which will be described in detail as well as embodiments for carrying out said invention.
Figure 1 presents an exemplary view of one of many embodiments for assembling the effluent electropurification system, through electron trapping in piping.
Figure 2 shows an exemplary view of an assembly combination using the effluent electropurification system, through electron trapping applied to piping interconnected with a tank.

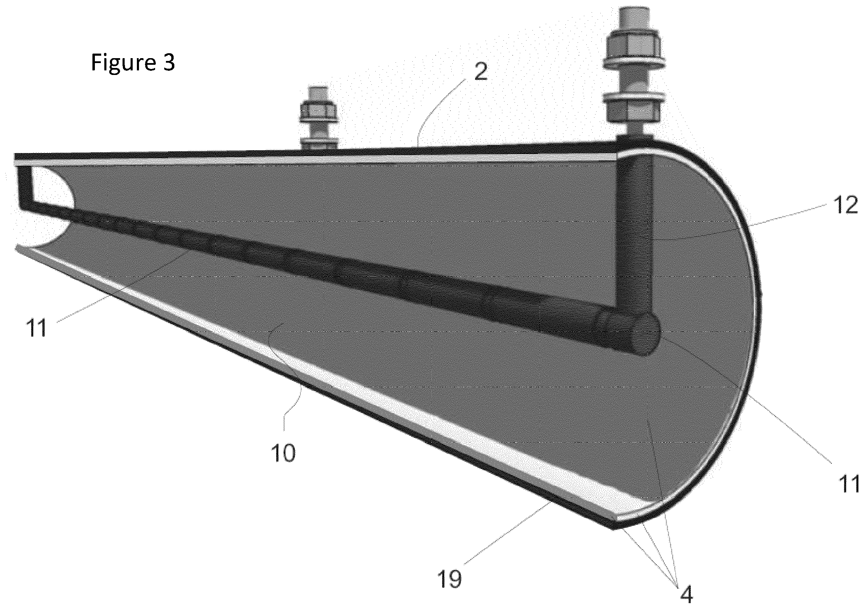

Figure 3 shows an exemplary view of a piping representing the assembly position of the inner electrode attached to the electrical insulating bus bar inside the pipping.

### DETAILED DESCRIPTION OF THE INVENTION

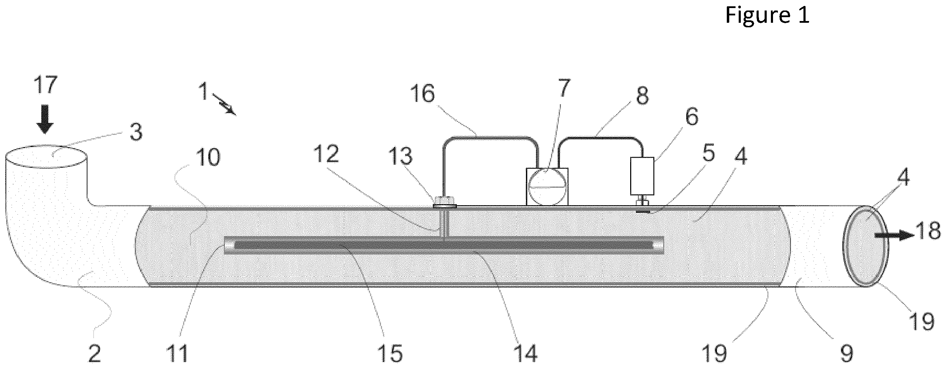

According to the attached figures, the present invention is characterized by an equipment (1) formed by piping (2) made of insulating material that receives on its entire inner face (3) a metallized mesh layer (4) coating the conductive material interconnected by wiring (5) to the spark gap (6) which is connected to the current controller (7) by wire (8) (Fig.1).

The metallized mesh layer (4) is insulated from the outer surface (9) of the piping (2).

The metallized mesh layer (4) coating the conductive material will contact the effluent.

Inner electrodes (11) are mounted inside (10) the pipe (2) attached to the electrical insulating bus bar (12) which extends to the outer part being fitted between the insulating sealing ring (13) that prevents any possibility of contact with the insulating bus bar (12) with the metallized mesh layer (4) (Fig.1).

The insulating sealing ring (13) in addition to isolating the contact between the insulating bus bar (12) with the metallized mesh layer (4) also prevents the effluent that travels inside the pipping from leaking to the outer part.

The inner electrodes (11) are externally coated with insulating material (14) and internally comprises conductive material (15) connected by a metallic wire (16) to the current controller (7) (Fig.1).

Another characterizing and fundamentally important part lies in that, should the metallized mesh layer (4) be negatively polarized, the conductive material (15) of the inner electrode (11) will be positively polarized and vice versa, with the conductive material (15) of the inner electrode (11) having negative polarity should the metallized mesh layer (4) be positively polarized.

Another characterizing part is that the insulating material (13) of the inner electrode (11) reduces the current value in relation to the metallized mesh layer (4) in 30% to 40% to create an electrical voltage.

This electrical voltage is created so that the effluent is exposed thereto for electropurification through electron trapping.

The conductive material (15) of the inner electrode (11) may be solid, liquid, or in powder form and will be defined according as required in its manufacture.

The insulating material to be used in the manufacture of the pipping (2) will be defined as required in its manufacture.

The material to be used as a metallized mesh layer (4) coating the inner face (3) of the piping (2) will be defined as required in its manufacture.

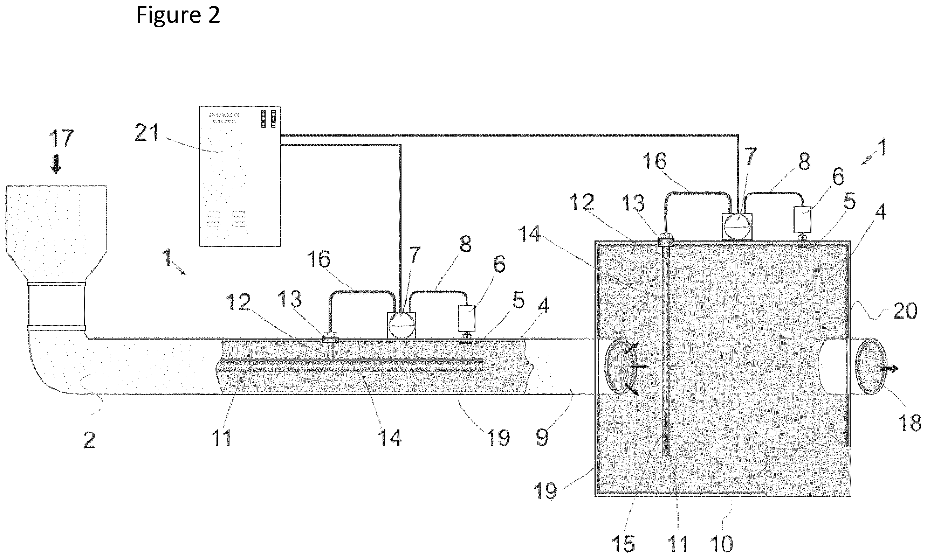

The assembly of the equipment (1) for electropurification through electron trapping may occur by means of a continuous effluent flow passaging through the piping (2) (Figs. 1 and 2), with the effluent entering through the inlet (17) and passing through the system with inner electrode (11) and metallized mesh layer (4) until being released at the outlet (18).

Another constructive form to assemble the equipment (1) for electropurification through electron trapping may occur by means of batches, agitation, and other known means in effluent treatment tanks (20), in which case the metallized mesh layer (4) may be mounted on the inner wall of the tank (20) (Fig. 2).

Another possible constructive form can be the assembly of the metallic mesh layer (4) on the outer part of the tank (20).

In tanks (20) the electrodes can be positioned vertically, horizontally, or with an inclination, constructive details of which are defined according to the design, material, and assembly site.

Another important detail is that the equipment (1) for electropurification through electron trapping can be incorporated into new equipment as well as adapted to existing effluent treatment tanks.

The electron trapping equipment (1) can be mounted in series and properly spaced apart from one another along a piping (2).

The electron trapping equipment (1) can be mounted directly on a series of tanks (20).

Or assembled through a combination interspersing the assembly of the electron trapping equipment (1) in several different arrangements of interconnections between piping (2) and tanks (20), each having equipment (1), with their combinations and assembly variations used to electropurify effluents defined in its use.

Every effluent electropurifier equipment (1) detailed by the patent must have one or more electropurification systems based on the targeted electron trapping action.

This trapping should respect the electron trapping similarly to the operation of a capacitor based on an electrolytic medium formed by the electrical voltage created between the insulating material (14) of the inner electrode (11), which reduces the passage of current in relation to the metallized mesh layer (4) in 30% to 40%, thereby providing electron trapping in the medium and creating electron saturation, which will form hydroxyls by the aqueous solutions, in which the effluents always have an abundance of water in their composition.

The functioning of electron trapping depends on high voltage sources (21), preferably DC generators with voltages above 1kV and up to 100 GV or more generation, if possible, either in AC or DC.

Another important detail for the correct electron trapping operation lies in that it always provides a spark gap (6), which will create a barrier for escaping trapped electrons and will only be activated in the event of electron saturation of the medium to be electropurified.

As such, there is the possibility of electropurifying continuous effluent flows, but the dimensioning of such a system is particularly important, in which the flow speed, more volumetric quantity, temperature, pressure, physical/chemical and electroconductive conditions must always be in accordance with the minimum amount of voltage and electrical current/power of the system at hand.

The inner face (3) of the piping (2) will have the electropurification system through electron trapping, which should preferably be coating of metallized mesh layers (4) with electrically conductive properties.

However, in a possible constructive variant, if the piping (2) is made of other electrical insulating materials, then outer and inner adaptations must be carried out as the electron trap will depend on this construction for such functionality.

It is extremely important to always understand the principle of electron trapping, as the system will fatally be downgraded to a simple electrolysis system and thus not work with low electric current if there are no basic rules established for the electrical voltage created between the insulating material (14) of the inner electrode (11), which reduces the passage of current in relation to the metallized mesh layer (4) in 30% to 40%, thereby providing the trapping of electrons in the medium and creating an electron saturation, It is very likely that the system will be reduced to a simple electrolysis system and so will not work with low electrical current.

In other words, one of the great differentials of the electron trapping object claimed herein is the feasibility of the electropurification process using low electrical currents and thus becoming an extremely energy-efficient system.

The metallized mesh layers (4) must always be coated with electrical insulating materials which can be the piping (2) itself or an insulating coating (19) that will lie just below the metallized mesh layer (4) and present resistance to the conditions of the effluents to be treated.

This electro-insulating coating of insulating materials (14) can be dimensioned as required by electropurifying demand and can made be of insulating materials such as ceramics, polymers, plastics, ceromers, rubber, glass, among other materials characteristics and new properties which may be discovered.

Regarding the metallic mesh layers (4), they must always be interconnected to a spark gap (6) to provide saturation and correct electron trapping creating a storage of electrical voltage, either positive or negative, and thus providing electropurifying, electroneutralization, electro-surfactant, electro-flocculant, electro-alkalinizing, electro-acidifying effects, reducing liquid surface tensions, corresponding electrochemical reactions and a number of very interesting physical/chemical reactions for the purpose of treating effluents inside (10) the piping (2) or tanks (20).

Inner electrodes (11) may be provided, when necessary, as the specific grounding itself may provide a functional electron trap under certain circumstances.

The inner electrodes (11) may be present inside (10) the piping (2) or the tanks (20), in which the electropurification process will take place.

The metallized mesh layers (4) must be internally constituted by electroconductive materials, metals, polymers, compomers, etc. However, such electrodes must be interconnected to a spark gap system (6) before traditional grounding, seeing that, if this does not occur, the electron trapping process will be fatally compromised due to the proposed electrical voltage escape.

The electropurification system can be made up of several methods, i.e., either dynamically in environments of continuous flow in piping (2) or statically in batches, which can be carried out in piping (2) or tanks (20) as well as in sites intended for decantation, flocculation, among other favorable environments of effluent treatment plants.

Such storage environments or effluent passage can be manufactured with different types of materials, for example: cement, fibers, metals, compomers, ceramics, polymers and many other materials which can be developed by contemporary technological resources, however, all these materials can be adapted to the electron trap systems with the optimal dimensions of optimal electrical voltages, insulating material (14) of the inner electrode (11), metallized mesh layer (4) and insulating coating (19), potentials from electrical current generating sources proportional to each specific case and always respecting the trapping of the proposed electrical differential, seeing that, if there is no optimal sizing, then the proposed yields will certainly be hindered.

Such sizing must be carried out with a properly studied mathematics for each type of effluent, respecting the variables, temperature, effluent amount, effluent passage speed, effluent quality, pressure, processing environment, providing a harmonization to the process itself and regulating the maximum electropurification yield for each specific case.

The systems must be built in compliance with safety regulations and controlled by an electronic panel, as sources generating high electrical voltages are used.

The equipment, comprising generators of high voltage sources (21) and their inner electrodes (11) and metallized mesh layers (4) that can be used in series, i.e., can be sized both in quantity and in their geometric shapes, sufficiently to perform the correct effluent electropurifier operation.

Higher voltages and powers can also be determined and applied to each system of inner electrodes (11) and corresponding metallized mesh layers (4), thus providing a perfect electropurification for each specific case.

Every electron trap in the equipment (1) must provide an optimal electrical voltage environment for each specific case, so that DCs can be directed at high voltage, as voltages that allow for electron passage on the covering materials of the metallic meshes (4) or the spark gaps (6) will always be required.

Evidently the entire safety system must be developed in an optimal manner, so as to avoid risks of electrical accidents, such as short circuits, shocks, etc.

In other words, in sewage treatment systems, organic waste treatment systems, chemical and organic industrial waste treatment systems, gold mining using mercury and/or cyanide, liquid, solid or gaseous effluent treatment systems or can be adapted to any possible situation of effluent treatment in general ways.

## Claims

1. System and method for effluent electropurification through targeted electron trapping, and corresponding equipment, **characterized in that** an equipment (1) formed by piping (2) or a tank (20) made of insulating material that receives, throughout the entire inner face (3) thereof, an insulating coating (19) followed by a metalized mesh layer (4) coating the conductive material and being interconnected by wiring (5) to the spark gap (6) which is connected to the current controller (7) by wire (8); the metallic wire (16) being connected to the conductive material (15) internally housed in the inner electrodes (11) which are externally coated with insulating material (14) and attached to the insulating bus bar (12) that crosses the center of the insulating sealing ring (13).

2. System and method for effluent electropurification through targeted electron trapping, and corresponding equipment, **characterized in that** the metallized mesh layer (4) is negatively polarized and the conductive material (15) of the inner electrode (11) is positively polarized or vice versa with the metallized mesh layer (4) being positively polarized and the conductive material (15) of the inner electrode (11) being negatively polarized.

3. System and method for effluent electropurification through targeted electron trapping, and corresponding equipment, **characterized in that** the insulating material (14) of the inner electrode (11) reduces the value of electron current passage from the conductive material (15) to the metallized mesh layer (4) in 30% to 40%, creating an electrical voltage in the inside (10) for saturation and electron trapping in the medium.

4. System and method for effluent electropurification through targeted electron trapping, and corresponding equipment, **characterized in that** the electropurification occurs at low electric currents by exposing the effluent to the electron trap created by the electrical voltage formed in the inside (10) in the gap between the inner electrode (11) in relation to the metallized mesh layer (4).

5. System and method for effluent electropurification through targeted electron trapping, and corresponding equipment, **characterized in that** the electron trapping method occurs based on an electrolytic medium formed by the electrical voltage created between the insulating material (14) of the inner electrode (11) that reduces the value of current passage to the metallized mesh layer (4) in 30% to 40%, forming the electron trap in the medium and creating electron saturation, which form hydroxyls by the aqueous solutions from the water present in the effluent composition.

6. System and method for effluent electropurification through targeted electron trapping, and corresponding equipment, **characterized in that** the inner electrodes (11) externally coated with insulating material (14) and the metallized mesh layer (4) are in contact with the effluent in the inside (10) of piping (2) or tanks (20).

7. System and method for effluent electropurification through targeted electron trapping, and corresponding equipment, **characterized in that** the assembly of the equipment (1) for electropurification occurs through the electron trap by means of a continuous effluent flow in the inside (10) by means of piping (2), with the effluent moving from the inlet (17) and passing through the system with electrodes (11) and metallized mesh layer (4) until being released at the outlet (18).

8. System and method for effluent electropurification through targeted electron trapping, and corresponding equipment, **characterized in that** the assembly of the equipment (1) for electropurification through the electron trap occurs in tanks (20) equipped with a system with electrodes (11) and a metallized mesh layer, which can be applied to sites intended for decantation, flocculation, among others, moved by means of batch processing, agitation and the like.

9. System and method for effluent electropurification through targeted electron trapping, and corresponding equipment, **characterized in that** the tank (20) has a constructive variant which allows receiving the metallized mesh layer (4) in the outer part thereof.

10. System and method for effluent electropurification through targeted electron trapping, and corresponding equipment, **characterized in that** the electron trapping equipment (1) can be assembled through a network with piping (2) arranged in series separated from one another along its length; by a combination thereof interspersed in several different assembly arrangements switching between interconnections of piping (2) and tanks (20), or only with tanks (20) arranged in series and properly spaced apart from one another.

11. System and method for effluent electropurification through targeted electron trapping, and corresponding equipment, **characterized in that** the electron trapping operation uses high voltage sources (21) preferably from DC generators with voltages above 1kV and up to 100 GV.

12. System and method for effluent electropurification through targeted electron trapping, and corresponding equipment, **characterized in that** the electron trap uses a spark gap (6) to create a barrier for escaping trapped electrons which is activated only when electron saturation in the effluent occurs during electropurification.

13. System and method for effluent electropurification through targeted electron trapping, and corresponding equipment, **characterized in that**, in continuous effluent flows, the system is proportionally sized to the effluent's characteristics, flow velocity, plus volumetric quantity, temperature, pressure, physical/chemical and electroconductive conditions in accordance with the minimum voltage amount and electric current/power of the system.

14. System and method for effluent electropurification through targeted electron trapping, and corresponding equipment, **characterized in that** the metallic mesh layer (4) is interconnected to a spark gap (6) for saturation and electron trapping, so as to create a stored electrical voltage, either positive or negative, providing electropurifying, electroneutralizing, electro-surfactant, electro-flocculating, electro-alkalinizing, electro-acidifying effects, reducing liquid surface tensions, corresponding electrochemical reactions and a number of physical/chemical reactions for treating effluents in the inside (10) of piping (2) or tanks (20).
